# EUROPÄISCHE PATENTANMELDUNG

(11) **EP 3 726 319 A1**
(43) Veröffentlichungstag der Anmeldung: **21.10.2020**
(21) Anmeldenummer: 19170139.0
(22) Anmeldetag: 18.04.2019
(51) Int. Cl.: G05B 19/418

(54) **VERFAHREN, VORRICHTUNGEN UND SYSTEM ZUM BEARBEITEN EINES WERKSTÜCKS**

(71) Anmelder: Siemens Aktiengesellschaft, 80333 München (DE)
(72) Erfinder: Krause, Stefan, 04177 Leipzig (DE); Lipp, Christian, 94065 Waldkirchen (DE); Meyer-Hentschel, Michael Johannes, 66133 Saarbrücken (DE); Nowitschkow, Alexander, 81739 München (DE); Robl, Peter, 94133 Röhrnbach (DE)

(57) **Zusammenfassung**

Die Erfindung betrifft eine Berechnungsvorrichtung, ein Steuersystem und Fertigungsgeräte, die es erlauben, den Fertigungsablauf bei der Bearbeitung eines Werkstückes dynamisch (also während der Produktion) zu steuern. Hierdurch können beispielsweise die Kapazitäten und/oder Ressourcen der Fertigungsgeräte besser ausgenutzt werden und es entstehen z. B. nur noch geringe Leerlaufzeiten der Fertigungsgeräte.

## Beschreibung

Die Erfindung bezieht sich auf Verfahren, Vorrichtungen und ein System zum Bearbeiten eines Systems.

Aufgabe der Erfindung ist es eine Alternative zum Stand der Technik bereitzustellen.

Nachfolgend werden Aspekte der Erfindung erläutert.

Gemäß einem ersten Aspekt betrifft die Erfindung ein Steuerungssystem für eine Fertigung aufweisend:
- mehrere Fertigungsgeräte, wobei ein jeweiliges Fertigungsgerät Geräteeigenschaften für eine Durchführung von Fertigungsschritten umfasst;
- ein Lademodul zum Laden von Ausführungsvoraussetzungen und/oder Fertigungsvarianten für eine Bearbeitung eines Werkstückes;
- ein Selektionsmodul, wobei
   - Selektionsmodul dazu eingerichtet ist eine der Fertigungsvarianten auszuwählen,
   - Selektionsmodul dazu eingerichtet ist entsprechende Fertigungsgeräte mittels ihrer der Geräteeigenschaften und/oder anhand der ausgewählten Fertigungsvariante auszuwählen;
- ein Transportmodul, wobei
   - das Transportmodul dazu eingerichtet ist das Werkstück zu den jeweiligen ausgewählten Fertigungsgeräten zu transportieren.

Beispielsweise können die Fertigungsvarianten die Ausführungsvoraussetzungen und/oder die Fertigungsanweisungen umfassen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um entsprechende Funktionen eines Moduls zu realisieren. Beispielsweise entsprechende Prozessoren von mehreren Modulen als ein integraler Prozessor ausgebildet sein.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "Ausführungsvoraussetzungen" können im Zusammenhang mit der Erfindung beispielsweise die Voraussetzungen verstanden werden, die für eine Abarbeitung von Fertigungsanweisungen durch ein Gerät oder eine Maschine erfüllt sein müssen. Die Ausführungsvoraussetzungen können beispielsweise Gerätevoraussetzungen (die z. B. auch als Skills bezeichnet werden können) vorgeben und/oder Fertigungsgruppen vorgeben und/oder vorausgesetzte bereits ausgeführte Fertigungsanweisungen vorgeben und/oder nachfolgende Voraussetzungen vorgeben. Bei den nachfolgenden Voraussetzungen kann es sich beispielsweise um nachfolgende Fertigungsanweisungen handeln, die z. B. von einem Gerät ausgeführt werden sollen, für das beispielsweise wieder Gerätevoraussetzungen vorgegeben sind. Es kann beispielsweise durch die nachfolgenden Voraussetzungen festgelegt sein, dass die nachfolgende Fertigungsanweisungen unmittelbar nach der Abarbeitung der (aktuellen) Fertigungsanweisungen abgearbeitet werden sollen. Hierzu können z. B. durch die nachfolgenden Voraussetzungen Geräte oder Fertigungsgruppen für die Abarbeitung vorgegeben sein. Beim Überprüfen von Gerätevoraussetzungen werden diese Beispielsweise anhand von Geräteeigenschaften überprüft.

"Arbeitsvorgänge" können beispielsweise eine kodierte Ablauffolge sein, um ein Werkstück (z. B. auch als zu fertigendes Produkt bezeichnet) entsprechenden seiner Spezifikation (z. B. Geometrie und/oder Materialeigenschaften und/oder aussehen) zu fertigen. Das zu fertigende Produkt, kann z. B. in Form von technischen Zeichnungen vorliegen. Die Arbeitsvorgänge sind dabei vorzugsweise als streng lineare Abfolge von Fertigungsanweisungen kodiert. Die Arbeitsvorgänge kodieren dabei beispielsweise auch entsprechende Arbeitsschritte oder einzelne Arbeitsvorgänge für ein Werkstück bei dessen Fertigung wie z. B. das Abschleifen des Werkstückes, das Bohren von Löchern, das Lackieren einer Oberfläche, Polieren einer Oberfläche oder eine Kombination der genannten Arbeitsschritte.

Unter "Fertigungsanweisungen" kann beispielsweise eine Kodierung von Arbeitsschritten oder Fertigungsschritten verstanden werden, wobei die Kodierung beispielsweise als Programmcode oder Steuercode für entsprechende (Fertigungs-)Geräte erfolgt. Die Fertigungsanweisungen der Arbeitsvorgänge geben beispielsweise zunächst eine strenge lineare Abarbeitungsreihenfolge durch die Geräte vor.

Unter "Fertigungsvarianten" kann beispielsweise ein Kodieren von mehreren Möglichkeiten der Umsetzung der Arbeitsvorgänge für die Bearbeitung eines Werkstückes verstanden werden. Die Fertigungsvarianten sind beispielsweise ein Datensatz oder eine Datenstruktur, die für eine jeweilige Fertigungsvariante die entsprechenden Fertigungsanweisungen und/oder die zugehörigen Ausführungsvoraussetzungen und/oder den zugehörigen Kopfdatensatz umfasst.

Bei weiteren Ausführungsformen des Steuersystems wird nach einer Abarbeitung der Fertigungsanweisungen durch ein Fertigungsgerät ein Bestätigungsdatensatz über die Abarbeitung gespeichert, wobei beispielsweise der Bestätigungsdatensatz in einer Statusinformation eines Kopfdatensatzes der entsprechenden Fertigungsanweisungen und/oder der entsprechenden Ausführungsvoraussetzungen gespeichert wird.

Bei weiteren Ausführungsformen des Steuersystems umfasst das Steuerungssystem ein Überprüfungsmodul, wobei
- das Überprüfungsmodul dazu eingerichtet ist ein Prüfergebnis für die ausgewählte Fertigungsvariante zu ermitteln,
- beispielsweise das Transportmodul abhängig von dem Prüfergebnis das Werkstück zu den ausgewählten Fertigungsgeräten transportiert,
- beispielsweise das Ermitteln des Prüfergebnisses bei der Übergabe des Werkstückes an eines der ausgewählten Geräte erfolgt.

Beispielsweise werden beim Ermitteln des Prüfergebnisses die Geräteeigenschaften des Fertigungsgerätes überprüft, ob diese beispielsweise Gerätevoraussetzungen der Ausführungsvoraussetzungen der Fertigungsanweisungen der ausgewählten Fertigungsvariante erfüllen. Erfüllt beispielsweise die Geräteeigenschaften die Gerätevoraussetzungen, wird dies im Prüfergebnis gespeichert. Wenn beispielsweise das Prüfergebnis angibt, dass die Geräteeigenschaften die Gerätevoraussetzungen erfüllen, so wird das Werkstück transportiert. Erfüllen die Geräteeigenschaften die Gerätevoraussetzungen beispielsweise nicht, so wird dies im Prüfergebnis gespeichert und das Transportieren wird anhand dieses Prüfergebnisses beispielsweise unterdrückt.

Bei weiteren Ausführungsformen des Steuersystems ist das Überprüfungsmodul dazu eingerichtet das Prüfergebnis anhand von Bestätigungsdatensätzen für abgearbeitete Fertigungsanweisungen und der vorausgesetzten bereits ausgeführten Fertigungsanweisungen zu ermitteln. Alternativ oder zusätzlich ist das Überprüfungsmodul dazu eingerichtet das Prüfergebnis anhand von aktuellen Geräteeigenschaften unter einer Berücksichtigung von Gerätevoraussetzungen zu ermitteln. Alternativ oder zusätzlich ist das Überprüfungsmodul dazu eingerichtet das Prüfergebnis anhand von aktuellen Geräteeigenschaften unter einer Berücksichtigung der Fertigungsanweisungen und/oder Ausführungsvoraussetzungen zu ermitteln.

Beispielsweise wird bei einem Erfüllen der entsprechenden Bedingungen dies in dem Prüfergebnis gespeichert und anhand dieses Prüfergebisses wird dann z. B. das Transportieren durchgeführt. Werden beispielsweise die entsprechenden Bedingungen nicht erfüllt wird dies im Prüfergebnis gespeichert und anhand dieses Prüfergebnisses wird das Transportieren unterdrückt.

Bei weiteren Ausführungsformen des Steuersystems umfasst das Selektionsmodul einen Optimierer, wobei der Optimierer dazu eingerichtet ist, die Fertigungsvariante unter einer Berücksichtigung einer vorgegebenen Optimierungsgröße (z. B. als Vorgaben oder Fertigungsvorgaben bezeichnet) auszuwählen, und wobei beispielsweise abhängig von der Optimierungsgröße Gruppen von Fertigungsgeräten gebildet werden, um die Fertigungsanweisungen entsprechend der Optimierung abzuarbeiten.

Bei weiteren Ausführungsformen des Steuersystems ist die Optimierungsgröße eine Fertigungszeit und/oder eine Auslastung der Fertigungsgeräte und/oder ein Materialverbrauch.

Das Steuersystem ist dahingehend vorteilhaft, um beispielsweise eine Fertigungsvarianten für die Bearbeitung eines Werkstücks auszuwählen und die dafür notwendigen Fertigungsgeräte anzusteuern. Durch die Erfindung ist es beispielsweise möglich die Arbeitsplanung und Ausführung für die Bearbeitung eines Werkstücks (z. B. ein Produkt) zu verbessern damit cyberphysische Produktionssysteme zuverlässiger und/oder automatisiert einen Fertigungsprozess abarbeiten können.

Gemäß einem weiteren Aspekt betrifft die Erfindung ein Fertigungsgerät aufweisend:
- ein Empfangsmodul, wobei das Empfangsmodul zum Empfangen eines Werkstückes und von Fertigungsanweisungen eingerichtet ist;
- Überprüfungsmodul, wobei das Überprüfungsmodul dazu eingerichtet ist ein Prüfergebnis für die Fertigungsanweisungen zu ermitteln,
- ein Ausführungsmodul, wobei das Ausführungsmodul dazu eingerichtet ist die Fertigungsanweisungen zur Bearbeitung des Werkstückes anhand des Prüfergebnisses auszuführen.

Beispielsweise werden beim Ermitteln des Prüfergebnisses die Geräteeigenschaften des Fertigungsgerätes überprüft, ob diese beispielsweise Gerätevoraussetzungen der Ausführungsvoraussetzungen erfüllen. Erfüllt beispielsweise die Geräteeigenschaften die Gerätevoraussetzungen wird dies im Prüfergebnis gespeichert. Wenn beispielsweise das Prüfergebnis angibt, dass die Geräteeigenschaften die Gerätevoraussetzungen erfüllen, so werden die entsprechenden Fertigungsanweisungen durch das Fertigungsgerät bzw. das Ausführungsmodul ausgeführt. Erfüllen die Geräteeigenschaften die Gerätevoraussetzungen beispielsweise nicht, so wird dies im Prüfergebnis gespeichert und das Ausführungsmodul unterdrückt anhand dieses Prüfergebnisses beispielsweise die Ausführung der Fertigungsanweisungen.

Bei weiteren Ausführungsformen des Fertigungsgeräts umfassen die Ausführungsvoraussetzungen Gerätevoraussetzungen und/oder vorausgesetzte bereits ausgeführte Fertigungsanweisungen.

Bei weiteren Ausführungsformen des Fertigungsgeräts ist das Überprüfungsmodul dazu eingerichtet das Prüfergebnis anhand von Bestätigungsdatensätzen für abgearbeitete Fertigungsanweisungen und der vorausgesetzten bereits ausgeführten Fertigungsanweisungen ermittelt. Alternativ oder zusätzlich ist das Überprüfungsmodul dazu eingerichtet das Prüfergebnis anhand von aktuellen Geräteeigenschaften unter einer Berücksichtigung von Gerätevoraussetzungen zu ermitteln. Alternativ oder zusätzlich ist das Überprüfungsmodul dazu eingerichtet das Prüfergebnis anhand von aktuellen Geräteeigenschaften unter einer Berücksichtigung der Fertigungsanweisungen und/oder Ausführungsvoraussetzungen zu ermitteln.

Beispielsweise wird bei einem Erfüllen der entsprechenden Bedingungen dies in dem Prüfergebnis gespeichert und anhand dieses Prüfergebisses wird dann z. B. das Ausführen der Fertigungsanweisungen gesteuert. Werden beispielsweise die entsprechenden Bedingungen nicht erfüllt wird dies im Prüfergebnis gespeichert und anhand dieses Prüfergebnisses wird das Ausführen der Fertigungsanweisungen unterdrückt.

Das Fertigungsgerät ist dahingehend vorteilhaft, um beispielsweise Arbeitsvorgänge, die als Ausführungsvoraussetzungen und Fertigungsanweisungen kodiert sind, automatisiert durch Fertigungsgeräte abzuarbeiten, die die entsprechenden Ausführungsvoraussetzungen erfüllen. Durch die Erfindung ist es beispielsweise möglich die Arbeitsplanung und Ausführung für die Bearbeitung eines Werkstücks (z. B. ein Produkt) zu verbessern damit cyberphysische Produktionssysteme zuverlässiger und/oder automatisiert einen Fertigungsprozess abarbeiten können.

Gemäß einem weiteren Aspekt betrifft die Erfindung eine Berechnungsvorrichtung zum Berechnen von Fertigungsanweisungen aufweisend:
- ein Lademodul, wobei das Lademodul zum Laden von Arbeitsvorgängen für ein Werkstück eingerichtet ist;
- ein Evaluierungsmodul, wobei
   - das Evaluierungsmodul dazu eingerichtet ist Ausführungsvoraussetzungen zumindest für einem Teil der Arbeitsvorgänge zu berechnen,
   - das Evaluierungsmodul dazu eingerichtet ist Fertigungsanweisungen zumindest für einem Teil der Arbeitsvorgänge zu berechnen,
   - das Evaluierungsmodul dazu eingerichtet ist jeweiligen Fertigungsanweisungen entsprechende Ausführungsvoraussetzungen zuzuordnen,
   - das Evaluierungsmodul dazu eingerichtet ist ausführbare Fertigungsvarianten für eine Bearbeitung des Werkstücks anhand der Fertigungsanweisungen und der Ausführungsvoraussetzungen zu berechnen;
- ein Bereitstellungsmodul, wobei das Bereitstellungsmodul dazu eingerichtet ist, die Fertigungsanweisungen und/oder die Ausführungsvoraussetzungen und/oder die Fertigungsvarianten bereitzustellen.

Unter "Fertigungsanweisungen" kann beispielsweise eine Kodierung von Arbeitsschritten oder Fertigungsschritt verstanden werden, wobei die Kodierung beispielsweise als Programmcode oder Steuercode für entsprechende (Fertigungs-)Geräte und/oder Fertigungsgruppen erfolgt. Die Fertigungsanweisungen der Arbeitsvorgänge geben beispielsweise zunächst eine strenge lineare Abarbeitungsreihenfolge durch die Geräte vor. Das Evaluierungsmodul analysiert dann unter Berücksichtigung der Geräteeigenschaften und/oder der Geräteeigenschaften der Geräte von Fertigungsgruppen die Fertigungsanweisungen der Arbeitsvorgänge. Bei dieser Analyse wird z. B. berücksichtigt, welche Fertigungsanweisungen von welchem Gerät zur Fertigung des Werkstückes ausgeführt werden kann und/oder welche vorausgesetzten bereits ausgeführten Fertigungsanweisungen bei einer Abarbeitung durch ein entsprechendes Gerät bereits vorliegen müssen, um das Werkstück zu fertigen, und/oder welche nachfolgenden Voraussetzungen notwendig sind, um das Werkstück zu fertigen. Das Ergebnis dieser Analyse für die jeweiligen Fertigungsanweisungen wird dann beispielsweise als entsprechenden Ausführungsvoraussetzungen der entsprechenden Fertigungsanweisungen kodiert. Auch können beispielsweise die Fertigungsanweisungen z. B. in Gruppen von Fertigungsanweisungen zusammengefasst werden (z. B. als Fertigungsanweisungsgruppen bezeichnet), die dann jeweils durch ein Gerät und/oder eine Fertigungsgruppe abgearbeitet werden können. Diesen Fertigungsanweisungsgruppen werden ggf. entsprechende Ausführungsvoraussetzungen zugeordnet. Das Evaluierungsmodul berechnet dann z. B. Fertigungsvarianten für eine Bearbeitung des Werkstücks anhand der Fertigungsanweisungen und der Ausführungsvoraussetzungen, um vorzugsweise unterschiedliche Reihenfolgen der Abarbeitung der Fertigungsanweisungen oder der Fertigungsanweisungsgruppen zu realisieren. Beispielsweise können in einer ersten Variante eine erste Fertigungsanweisung von einem ersten Gerät abgearbeitet werden, eine zweite Fertigungsanweisung von einem zweiten Gerät abgearbeitet werden und eine dritte Fertigungsanweisung von einem dritten Gerät abgearbeitet werden, wobei z. B. die Geräte und/oder die Reihenfolge jeweils die Ausführungsvoraussetzungen der entsprechenden Fertigungsanweisungen erfüllen. Beispielsweise kann in einer zweiten Variante zuerst die zweite Fertigungsanweisung von dem zweiten Gerät abgearbeitet werden, dann die erste Fertigungsanweisung von dem ersten Gerät abgearbeitet werden und die dritte Fertigungsanweisung von dem dritten Gerät abgearbeitet werden, wobei auch hier die Geräte und die Reihenfolge jeweils die Ausführungsvoraussetzungen der entsprechenden Fertigungsanweisungen erfüllen. Die Erfindung ist dahingehend vorteilhaft, um z. B. die Auslastung der Geräte (z. B. Fertigungsgeräte) bei der Abarbeitung der Fertigungsanweisungen auf flexible Weise zu berücksichtigen. Ist beispielsweise ein Fertigungsgerät gerade blockiert kann beispielsweise eine Fertigungsvariante gewählt werden, bei der das entsprechende ausgelastete Fertigungsgerät erst zu einem späteren Zeitpunkt benötigt wird, wenn dies beispielsweise gerade unausgelastet ist und die entsprechenden Fertigungsanweisungen abarbeiten kann.

Bei weiteren Ausführungsformen der Berechnungsvorrichtung umfassen die Ausführungsvoraussetzungen
- Geräteeigenschaften als Gerätevoraussetzung von Fertigungsgeräten, die beispielsweise die Fertigungsanweisungen ausführen sollen, und/oder
- vorausgesetzte bereits ausgeführte Fertigungsanweisungen, die beispielsweise vor einer Ausführung der aktuellen Fertigungsanweisungen ausgeführt sein sollen und/oder
- Vorgaben über nachfolgende Fertigungsanweisungen, die beispielsweise nach den aktuellen Fertigungsanweisungen ausgeführt werden sollen.

Bei weiteren Ausführungsformen der Berechnungsvorrichtung umfassen die Ausführungsvoraussetzungen und/oder die jeweiligen Fertigungsanweisungen und/oder die Fertigungsanweisungsgruppen einen Kopfdatensatz mit einer Statusinformation über deren Abarbeitung, wobei beispielsweise die Statusinformation oder der Kopfdatensatz nach einem Abarbeiten einer jeweiligen Fertigungsanweisung durch ein Fertigungsgerät einen Bestätigungsdatensatz umfasst. Dies wird beispielsweise dadurch realisiert, dass ein entsprechendes Fertigungsgerät die Bestätigungsdatensatz nach Abschluss der Fertigungsanweisungen in der Statusinformation speichert. Der Kopfdatensatz kann dabei noch weitere Daten umfassen wie z. B. Ausführungsvoraussetzungen und/oder einen Teil der Ausführungsvoraussetzungen und/oder einen Zustand der Abarbeitung von entsprechenden Fertigungsanweisungen. Dies kann z. B. in einer entsprechenden Statusinformation gespeichert sein.

Bei weiteren Ausführungsformen der Berechnungsvorrichtung werden die jeweilige Fertigungsanweisung als Fertigungsanweisungsgruppen strukturiert, wobei die jeweiligen Fertigungsanweisungsgruppen anhand der Gerätevoraussetzung von den jeweiligen Fertigungsanweisungen gebildet werden.

Bei weiteren Ausführungsformen der Berechnungsvorrichtung umfasst die Berechnungsvorrichtung einen Optimierer, wobei der Optimierer dazu eingerichtet ist die Fertigungsanweisungen für die jeweiligen Fertigungsgeräte hinsichtlich einer vorgegebenen Optimierungsgröße zu optimieren, und wobei beispielsweise abhängig von der Optimierungsgröße Gruppen von Fertigungsgeräten (oder auch als Fertigungsgruppen bezeichnet) gebildet werden, um die Fertigungsanweisungen entsprechend der Optimierung abzuarbeiten.

Bei weiteren Ausführungsformen der Berechnungsvorrichtung ist die Optimierungsgröße eine Fertigungszeit und/oder eine Auslastung der Fertigungsgeräte und/oder ein Materialverbrauch.

Bei weiteren Ausführungsformen umfasst das Steuersystem die Berechnungsvorrichtung. Hierbei stellt z. B. die Berechnungsvorrichtung dem Steuersystem die Ausführungsvoraussetzungen und/oder die Fertigungsanweisungen und/oder die Fertigungsvarianten bereit. Beispielsweise nutzt das Evaluierungsmodul das Selektionsmodul des Steuersystems, um ggf. entsprechende Geräteeigenschaften über die Geräte zu laden, die z. B. die Fertigungsanweisungen abarbeiten können.

Die Berechnungsvorrichtung ist dahingehend vorteilhaft, um beispielsweise die Arbeitsvorgänge als Ausführungsvoraussetzungen und Fertigungsanweisungen zu kodieren und anhand dieser ausführbare Fertigungsvarianten, die beispielsweise ein Fertigungsvariantendatensatz sind, zu ermitteln. Durch die Erfindung ist es beispielsweise möglich die Arbeitsplanung und Ausführung für die Bearbeitung eines Werkstücks (z. B. ein Produkt) zu verbessern damit cyberphysische Produktionssysteme zuverlässiger und/oder automatisiert einen Fertigungsprozess abarbeiten können. Insbesondere können hierdurch auch Ressourcen (z. B. Energie und Material) gespart werden, indem die Auslastung der entsprechenden Fertigungsgeräte optimiert wird.

Hierdurch kann bei der Produktion eine erhöhte Flexibilität erreicht werden. Dies ist vorteilhaft, da hierdurch eine geringere Durchlaufzeit und/oder Nacharbeitskosten und/oder eine Steigerung der Liefertreue und Auslastung in der Produktion und/oder Montage erreicht werden. Zusätzlich kann z. B. einfacher auf Anforderungen vom Kunden und Markt reagiert und die Produktion und Montage effizient gehalten werden.

Gemäß einem weiteren Aspekt betrifft die Erfindung ein computerimplementiertes Verfahren zum Steuern einer Fertigung mit folgenden Verfahrensschritten:
- Laden von Fertigungsvarianten und/oder Ausführungsvoraussetzungen und/oder Fertigungsanweisungen für eine Bearbeitung eines Werkstückes;
- Auswählen einer der Fertigungsvarianten, wobei entsprechende Fertigungsgeräte mittels ihrer der Geräteeigenschaften und/oder anhand der ausgewählten Fertigungsvariante auszuwählen;
- Transportieren des Werkstücks zu den jeweiligen ausgewählten Fertigungsgeräten.

Bei weiteren Ausführungsformen des Verfahrens umfasst das Verfahren weitere Verfahrensschritte, entsprechend der Merkmale des Steuerungssystems oder der weiteren Merkmale des Steuerungssystems oder dessen Ausführungsformen.

Gemäß einem weiteren Aspekt betrifft die Erfindung ein computerimplementiertes Verfahren zum Ausführen von Fertigungsanweisungen mit folgenden Verfahrensschritten:
- Empfangen eines Werkstückes und von Fertigungsanweisungen;
- Ermitteln eines Prüfergebnisses für die Fertigungsanweisungen;
- Ausführen der Fertigungsanweisungen zur Bearbeitung des Werkstückes anhand des Prüfergebnisses.

Bei weiteren Ausführungsformen des Verfahrens umfasst das Verfahren weitere Verfahrensschritte, entsprechend der Merkmale des Fertigungsgerätes oder weiterer Merkmale des Fertigungsgerätes oder dessen Ausführungsformen.

Gemäß einem weiteren Aspekt betrifft die Erfindung ein computerimplementiertes Verfahren zum Berechnen von Fertigungsanweisungen mit folgenden Verfahrensschritten:
- Laden von Arbeitsvorgängen für ein Werkstück;
- Berechnen von Ausführungsvoraussetzungen für zumindest einen Teil der Arbeitsvorgänge;
- Berechnen von Fertigungsanweisungen für zumindest einen Teil der Arbeitsvorgänge;
- Zuordnen, wobei den jeweiligen Fertigungsanweisungen entsprechende Ausführungsvoraussetzungen zugeordnet werden;
- Berechnen von ausführbaren Fertigungsvarianten für eine Bearbeitung des Werkstücks anhand der Fertigungsanweisungen und/oder der Ausführungsvoraussetzungen;
- Bereitstellen der Fertigungsanweisungen und/oder der Ausführungsvoraussetzungen und/oder der Fertigungsvarianten.

Beispielsweise handelt es sich bei dem Verfahren, um ein Verfahren zum Berechnen von Fertigungsanweisungen für ein Fertigungsgerät oder ein cyberphysikalisches Fertigungssystem.

Bei weiteren Ausführungsformen des Verfahrens umfasst das Verfahren weitere Verfahrensschritte, entsprechend der Merkmale der Berechnungsvorrichtung oder der weiteren Merkmale der Berechnungsvorrichtung oder dessen Ausführungsformen.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Fertigungsgerät und/oder die Berechnungsvorrichtung und/oder das Steuerungssystem erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Fertigungsgerät und/oder die Berechnungsvorrichtung und/oder das Steuerungssystem erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;
- Fig. 6: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

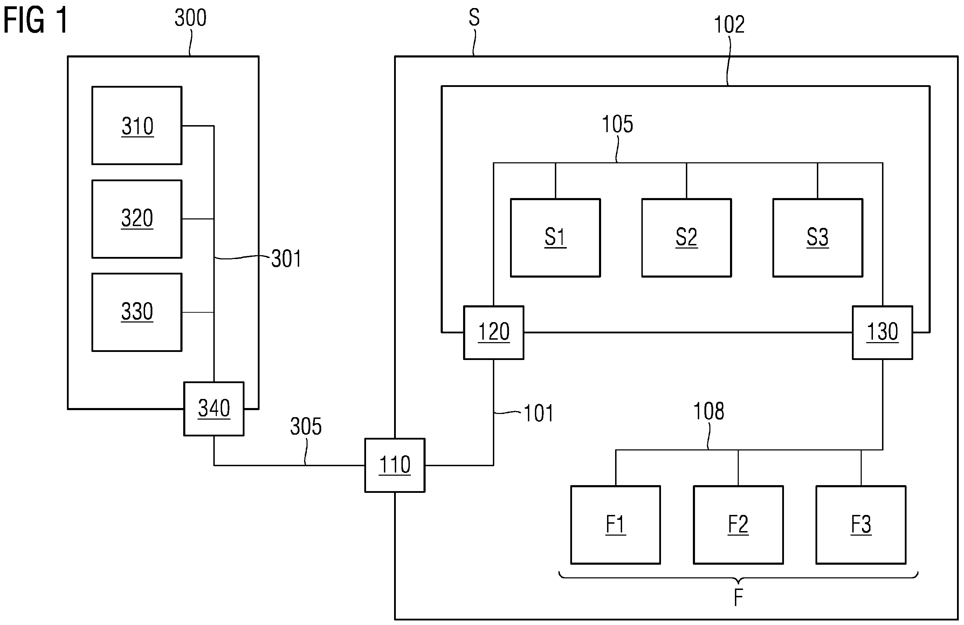

Fig. 1 zeigt dabei eine cyberphysikalische Produktionsanlage. Die Produktionsanlage kann z. B. für die Fertigung von Motoren, mechanischer Komponenten, elektromechanischer Komponenten, elektrischer Komponenten, elektronischer Komponenten, mechatronischer Komponenten oder für eine Kombination der genannten Möglichkeiten eingerichtet sein. Entsprechend kann ein Werkstück beispielsweise ein Motor, eine mechanische Komponente, eine elektromechanische Komponente, eine elektrische Komponente, eine elektronische Komponente, eine mechatronische Komponente oder eine Kombination der genannten Möglichkeiten sein.

Die Produktionsanlage umfasst eine Berechnungsvorrichtung 300, ein Steuersystem S mit mehreren Fertigungsgeräten F (z. B. ein erstes Fertigungsgerät F1, ein zweites Fertigungsgerät F2 und ein drittes Fertigungsgerät F3). Die Berechnungsvorrichtung 300 ist mit einer ersten Kommunikationsverbindung 305 (z. B. Internetverbindung, Mobilfunkverbindung oder eine Ethernetverbindung) mit dem Steuersystem S kommunikativ verbunden. Hierzu umfasst das Steuersystem S beispielsweise ein erstes Kommunikationsmodul 110 (z. B. eine Ethernetschnittstelle oder Netzwerkkarte) und die Berechnungsvorrichtung 300 umfasst ein drittes Kommunikationsmodul 340 (z. B. eine Ethernetschnittstelle oder Netzwerkkarte). Zudem umfassen die Fertigungsgeräte, z. B. ein erstes Fertigungsgerät, jeweils ein zweites Kommunikationsmodul 240 (z. B. eine Ethernetschnittstelle oder Netzwerkkarte).

Die Berechnungsvorrichtung 300 umfasst zudem ein Lademodul 310, ein Evaluierungsmodul 320 und ein Bereitstellungsmodul 330, die über einen Bus 301 miteinander und dem dritten Kommunikationsmodul 340 verbunden sind.

Das Lademodul 310 ist zum Laden von Arbeitsvorgängen für ein Werkstück eingerichtet. Die Arbeitsvorgänge kodieren dabei beispielsweise das zu fertigende Produkt, z. B. in Form von technischen Zeichnungen oder als streng lineare Abfolge von Fertigungsanweisungen. Die Arbeitsvorgänge kodieren dabei beispielsweise auch entsprechende Arbeitsschritte oder einzelne Arbeitsvorgänge für ein Werkstück bei dessen Fertigung wie z. B. das Abschleifen des Werkstückes, das Bohren von Löchern, das Lackieren einer Oberfläche, Polieren einer Oberfläche oder eine Kombination der genannten Arbeitsschritte.

Das Evaluierungsmodul 320 ist dazu eingerichtet Ausführungsvoraussetzungen zumindest für einem Teil der Arbeitsvorgänge zu berechnen. Das Evaluierungsmodul 320 ist zudem dazu eingerichtet Fertigungsanweisungen zumindest für einen Teil der Arbeitsvorgänge zu berechnen. Vorzugsweise werden hierbei die entsprechenden Fertigungsanweisungen und/oder Ausführungsvoraussetzungen für alle Arbeitsvorgänge berechnet.

Das Evaluierungsmodul 320 ist zudem dazu eingerichtet jeweiligen Fertigungsanweisungen entsprechende Ausführungsvoraussetzungen zuzuordnen. Hierbei werden beispielsweise die vorher berechneten Ausführungsvoraussetzungen den entsprechenden Fertigungsanweisung einzeln oder in Gruppen zugeordnet. Die entsprechenden Ausführungsvoraussetzungen können hierzu beispielsweise in den Fertigungsanweisungen gespeichert werden oder mittels eines Links oder einer Referenz mit diesen assoziiert werden. Hierzu können beispielsweise eindeutige Identifizierer für entsprechende Ausführungsvoraussetzungen gebildet werden und in den Fertigungsanweisungen gespeichert werden. Die Ausführungsvoraussetzungen und/oder die Fertigungsanweisungen werden dann beispielsweise in einem Speichermodul (z. B. eine Datenbank) gespeichert, die z. B. von dem Steuersystem S abgerufen werden oder an das Steuersystem S übertragen, wobei das Steuersystem S die Ausführungsvoraussetzungen und/oder die Fertigungsanweisungen in einem Speichermodul (z. B. eine Datenbank) speichert. Das Steuersystem S kann hierzu beispielsweise ebenfalls das Speichermodul umfassen.

Den Fertigungsanweisungen oder einem Teil der Fertigungsanweisungen können beispielsweise jeweils einzeln entsprechende Ausführungsvoraussetzungen zugeordnet werden. Alternativ oder zusätzlich können beispielsweise die Fertigungsanweisungen oder ein Teil der Fertigungsanweisungen gruppiert werden und diesen Gruppen beispielsweise jeweils einzeln entsprechende Ausführungsvoraussetzungen zugeordnet werden.

In einer Variante ist das Evaluierungsmodul 320 dazu eingerichtet ist zumindest einen Teil der Fertigungsanweisungen (vorzugsweise alle Fertigungsanweisungen) und/oder der Arbeitsvorgänge (vorzugsweise alle Arbeitsvorgänge) anhand der Ausführungsvoraussetzungen und von Geräteeigenschaften der jeweiligen Fertigungsgeräten F auszuwählen und spezifisch jeweils für ausgewählte Fertigungsgeräte als (gerätespezifische) Fertigungsanweisungen zu speichern. Dabei werden die jeweiligen ausgewählten Fertigungsgeräte anhand der Geräteeigenschaften und der Ausführungsvoraussetzungen bestimmt. Hierzu können z. B. die jeweiligen (gerätespezifischen) Fertigungsanweisungen die Ausführungsvoraussetzungen und/oder die Geräteeigenschaften des jeweiligen ausgewählten Gerätes umfassen.

Das Evaluierungsmodul 320 ist zudem dazu eingerichtet das ausführbare Fertigungsvarianten für eine Bearbeitung des Werkstücks anhand der Fertigungsanweisungen und/oder der Ausführungsvoraussetzungen zu berechnen.

Das Bereitstellungsmodul 330 ist dazu eingerichtet, die Fertigungsanweisungen (ggf. umfassen die gerätespezifischen Fertigungsanweisungen) und/oder die Ausführungsvoraussetzungen und/oder die Fertigungsvarianten bereitzustellen. Das Bereitstellen kann beispielsweise in Form eines Übermittelns oder Sendens an das Systemsystem S erfolgen.

Die Fertigungsgeräte F können beispielsweise jeweils Geräteeigenschaften umfassen. Ausführungsvoraussetzungen umfassen, wie bereits erwähnt, Gerätevoraussetzungen, die z. B. für eine Durchführung von Fertigungsschritten oder den Fertigungsgeräten F vorgegeben sind. Damit ein Fertigungsgerät entsprechende Fertigungsanweisungen ausführen darf, müssen z. B. die entsprechenden Geräteeigenschaften des entsprechenden Fertigungsgerätes die entsprechenden Gerätevoraussetzungen der Ausführungsvoraussetzungen der entsprechenden Fertigungsanweisungen erfüllen.

Die entsprechenden Geräteeigenschaften werden beispielsweise an die Berechnungsvorrichtung 300 und/oder an das Steuersystem S übertragen. Diese Geräteeigenschaften können beispielsweise aktualisiert und übertragen werden. Diese Aktualisierung kann beispielsweise nach einer Änderung der Geräteeigenschaften eines Fertigungsgerätes, zu vorgegebenen Zeitpunkten für ein Fertigungsgerät oder intervallgesteuert für ein Fertigungsgerät erfolgen. Bei der Aktualisierung werden dann die Geräteeigenschaften entsprechend an die Berechnungsvorrichtung 300 und/oder an das Steuersystem S übertragen.

Die Berechnungsvorrichtung 300 kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Das Steuersystem S (z. B. ein Produktionssteuerungssystem) umfasst zudem ein Lademodul S1, ein Selektionsmodul S2, ein Transportmodul S2, ein optionales viertes Kommunikationsmodul 120 und ein optionales fünftes Kommunikationsmodul 130, die über einen Bus 105 kommunikativ verbunden sind. Das Lademodul S1, das Selektionsmodul S2, das Transportmodul S2, das optionale vierte Kommunikationsmodul 120 und das optionale fünfte Kommunikationsmodul 130 können beispielsweise ein Gerätesteuerungssystem 102 bilden.

Nachdem die Ausführungsvoraussetzungen und/oder die Fertigungsanweisungen durch die Berechnungsvorrichtung 300 bereitgestellt wurden, lädt das Steuersystem S die Ausführungsvoraussetzungen und/oder die Fertigungsanweisungen und/oder die Fertigungsvarianten z. B. jeweils als ein entsprechender Datensatz. Zum Laden empfängt z. B. das Lademodul S1 des Steuersystems S die Ausführungsvoraussetzungen und/oder die Fertigungsanweisungen von der Berechnungsvorrichtung 300. Hierzu werden die Ausführungsvoraussetzungen und/oder die Fertigungsanweisungen über das erste Kommunikationsmodul 110 an das vierte Kommunikationsmodul 120 über einen Bus 101 übertragen.

Das Selektionsmodul S2 ist dazu eingerichtet eine der Fertigungsvarianten auszuwählen. Dabei ist das Selektionsmodul dazu eingerichtet ist entsprechende Fertigungsgeräte mittels ihrer der Geräteeigenschaften und/oder anhand der ausgewählten Fertigungsvariante auszuwählen. Es werden also beispielsweise anhand der Ausführungsvoraussetzungen und/oder der Fertigungsanweisungen unter einer Berücksichtigung der Geräteeigenschaften und z. B. einer Optimierungsgröße zunächst eine Fertigungsvariante ausgewählt. Für die ausgewählte Fertigungsvariante werden die für die Ausführung der entsprechenden Fertigungsanweisungen der entsprechenden Fertigungsvarianten, die dafür notwendigen Fertigungsgeräte ausgewählt, die die Fertigungsanweisungen und/oder Ausführungsvoraussetzungen beispielsweise am besten erfüllen.

Dabei kann durch die Ausführungsvoraussetzungen und/oder der Fertigungsanweisungen gefordert sein, welche Art von Fertigungsgeräte einen oder mehrere Fertigungsanweisungen abarbeiten soll (z. B. in Form von gespeicherten Gerätevoraussetzungen, die die Geräteeigenschaften eines Fertigungsgerätes erfüllen müssen). Es kann beispielsweise durch die Fertigungsvoraussetzungen eine Fertigungspräzision vorgegeben sein, es kann beispielsweise eine Fertigungszuverlässigkeit für entsprechende Fertigungsgeräte F vorgegeben sein oder es kann eine Kombination der genannten Ausführungsvoraussetzungen vorgegeben sein.

Alternativ oder zusätzlich kann durch die Ausführungsvoraussetzungen für einen oder mehrere Fertigungsanweisungen beispielsweise vorgegeben sein, welche Fertigungsanweisungen ausgeführt sein müssen, bevor die aktuell abzuarbeitenden Fertigungsanweisungen abgearbeitet werden dürfen. Alternativ oder zusätzlich kann durch die Ausführungsvoraussetzungen für einen oder mehrere Fertigungsanweisungen beispielsweise vorgegeben sein, welche Fertigungsanweisungen zwingend als nächstes nach der Abarbeitung der aktuellen Fertigungsanweisungen abzuarbeiten sind.

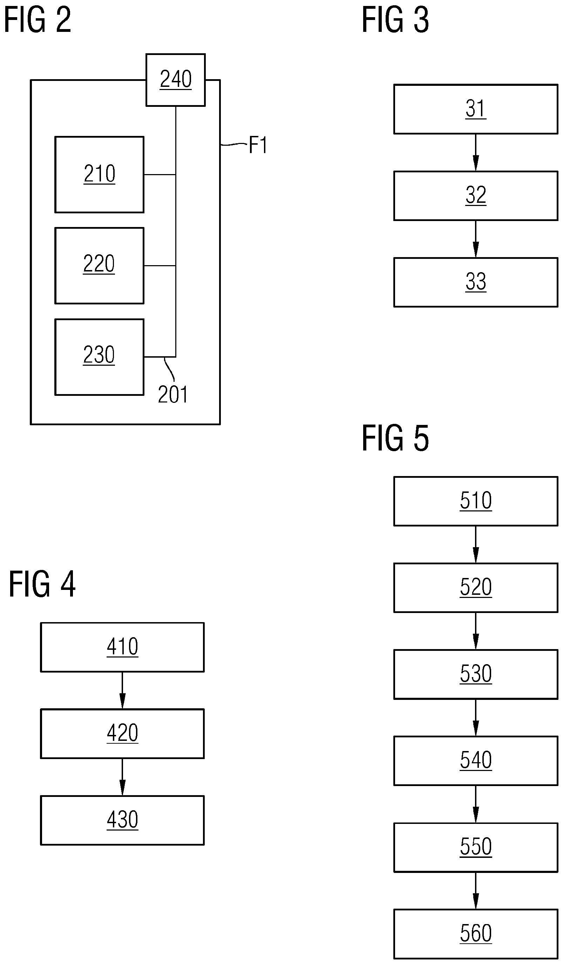

Das Steuersystem S steuert somit anhand der Ausführungsvoraussetzungen und/oder der Fertigungsanweisungen und/oder der Fertigungsvarianten (oder einer ausgewählten Fertigungsvariante) eine Bearbeitung des Werkstücks. Hierzu werden die entsprechenden der Ausführungsvoraussetzungen mittels des fünften Kommunikationsmoduls 130 über eine Kommunikationsverbindung 108 an die Fertigungsgeräte F übertragen. Hierzu können die Fertigungsgeräte F ebenfalls entsprechende Kommunikationsmodule umfassen (siehe Fig. 2). Bei den genannten Kommunikationsmodulen kann es sich beispielsweise um Mobilfunkeinrichtungen oder Etherneteinrichtungen oder Netzwerkkarten handeln.

Das Transportmodul S3 ist dazu eingerichtet das Werkstück zu den jeweiligen ausgewählten Fertigungsgeräten zu transportieren. Das Transportmodul S3 kann beispielsweise als ein Fertigungsroboter oder ein Förderband realisiert sein.

Das Steuersystem S steuert also anhand der Ausführungsvoraussetzungen und/oder der Fertigungsanweisungen eine Bearbeitung des Werkstücks, durch die entsprechenden ausgewählten Fertigungsgeräte.

Das Steuersystem S kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Mit dem vorgestellten System ist es für eine Produktfertigung und -montage nicht mehr nötig jeden Arbeitsvorgang linear mit dem vorhergehenden und nachfolgenden Arbeitsvorgang zu verknüpfen.

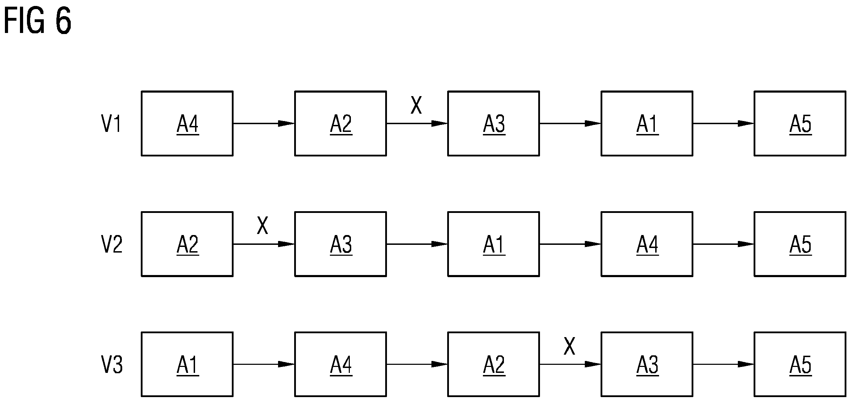

Beispielsweise kodieren die Fertigungsanweisungen, die beispielsweise Steuerbefehle oder Programmbefehle sind, Arbeitsvorgänge bei der Fertigung eines Werkstücks wie eines Elektromotors. Die Fertigungsanweisungen können dabei beispielsweise durch drei unterschiedliche Fertigungsvarianten ausgeführt werden, wobei beispielsweise eine Fertigungsvariante gewählt wird, bei der das Werkstück möglichst schnell gefertigt wird. (Fig. 6)

Die Arbeitsvorgänge für die Fertigung des Elektromotors geben beispielsweise vor, dass fünf Gruppen von Fertigungsanweisungen A1 - A5 (Fig. 6) von fünf Fertigungsgeräten abgearbeitet werden müssen. Bei einer konventionellen Abarbeitung der Fertigungsanweisungen würden die einzelnen Arbeitsvorgänge linear nacheinander abgearbeitet werden. Bei der Erfindung wurden durch die Berechnungsvorrichtung drei Fertigungsvarianten V1-V3 berechnet. Dabei ist die erste Fertigungsvariante V1 besonders kostengünstig oder ressourcenschonend bei der Abarbeitung. Die zweite Fertigungsvariante V2 kann besonders schnell abgearbeitet werden und die dritte Fertigungsvariante V3 ist besonders zuverlässig bei der Abarbeitung der Fertigungsanweisungen.

Die erste Gruppe von Fertigungsanweisungen A1 wird dabei von dem ersten Fertigungsgerät abgearbeitet. Die zweite Gruppe von Fertigungsanweisungen A2 wird dabei von dem zweiten Fertigungsgerät abgearbeitet. Die dritte Gruppe von Fertigungsanweisungen A3 wird dabei von dem dritten Fertigungsgerät abgearbeitet. Die vierte Gruppe von Fertigungsanweisungen A4 wird dabei von dem vierten Fertigungsgerät abgearbeitet. Die fünfte Gruppe von Fertigungsanweisungen A5 wird dabei von dem fünften Fertigungsgerät abgearbeitet. Die Vorgabe, welches Gerät welche Gruppe abarbeitet, ist beispielsweise in den Ausführungsvoraussetzungen der jeweiligen Gruppe von Fertigungsanweisungen gespeichert.

Das erste Fertigungsgerät fährt bei der Abarbeitung der Gruppe A1 beispielsweise den Läufer ein. Das zweite Fertigungsgerät montiert bei der Abarbeitung der Gruppe A2 das Lagerschild. Ein drittes Fertigungsgerät montiert bei der Abarbeitung der Gruppe A3 den Lüfter. Ein viertes Fertigungsgerät montiert bei der Abarbeitung der Gruppe A4 den Klemmkasten und ein fünftes Fertigungsgerät führt bei der Abarbeitung der Gruppe A5 die Endabnahme durch. Durch die Ausführungsvoraussetzungen der Gruppe A3 ist beispielsweise vorgegeben, dass die Gruppe A2 unbedingt vor der Abarbeitung der Fertigungsanweisungen Gruppe A3 ausgeführt werden muss. Alternativ oder zusätzlich können die Ausführungsvoraussetzungen der Gruppe A2 fordern, dass die Ausführung der Gruppe A3 unmittelbar nach der Ausführung der Gruppe A2 folgen soll. Diese Verknüpfung der Gruppe A2 und A3 ist in Fig. 6 durch das X dargestellt. Auch ist für die Gruppe A5 durch deren entsprechenden Ausführungsvoraussetzungen vorgegeben, dass die Gruppen A1 - A4 ausgeführt sein müssen, damit die Gruppe A5 ausgeführt werden kann.

Soll das Werkstück also möglichst schnell gefertigt werden, so wird die zweite Fertigungsvariante ausgewählt. Das Steuersystem wählt zunächst die entsprechende Fertigungsvariante unter Berücksichtigung von entsprechenden Fertigungsvorgaben (z. B. kurze Fertigungszeit) aus und steuert dann die entsprechenden Geräte in der Reihenfolge an, so wie dies durch die ausgewählte Fertigungsvariante und/oder Fertigungsanweisungen und/oder Ausführungsvoraussetzungen vorgegeben ist.

Bei dem erfindungsgemäßen Verfahren können beispielsweise auch die freien Ressourcen bzw. Kapazitäten der Fertigungsgeräte ausgewertet werden und anhand dieser unter einer Berücksichtigung der Ausführungsvoraussetzungen die Fertigungsanweisungen für die entsprechenden Arbeitsvorgänge ganz oder teilweise parallel ausgeführt werden. Beispielsweise könnte die Gruppe A1 und die Gruppe A4 parallel ausgeführt werden, wenn die entsprechenden Ausführungsvoraussetzungen dies erlauben.

Beispielsweise könnte das Einfahren des Läufers und die Montage des Klemmkastens erfolgen, wenn aktuell die entsprechenden Fertigungsgeräte über ausreichend freie Kapazitäten/Ressourcen verfügen. Hierzu werden die entsprechenden freien Kapazitäten/Ressourcen von jeweiligen Fertigungsgeräten beispielsweise in den Geräteeigenschaften gespeichert bzw. die Geräteeigenschaften entsprechend aktualisiert und der Berechnungsvorrichtung und/oder dem Steuersystem übertragen. Entsprechend kann es sich beispielsweise bei dem Steuersystem um einen intelligenten Werkstückträger handeln, der mittels der Berechnungsvorrichtung über die Fertigungsanweisungen und/oder den Ausführungsvoraussetzungen für die Bearbeitung eines Werkstückes konfiguriert wird.

Beispielsweise können die Arbeitsvorgänge oder Arbeitsschritte in die Fertigungsanweisungen kodiert werden. Die zugewiesenen Ausführungsvoraussetzungen (z. B. auch als spezielle Kopfinformationen bezeichnet) erlauben eine flexible Abarbeitung der Fertigungsanweisungen. Hierbei werden mittels der Ausführungsvoraussetzungen die Arbeitsschrittvoraussetzungen berücksichtigt. Somit können anhand dieser qualifizierenden Ausführungsvoraussetzungen mit voller Flexibilität alle Optionen des nächstmöglichsten Arbeitsvorgangs gewählt werden, der in den Fertigungsanweisungen kodiert ist.

Damit werden die entsprechend in den Fertigungsanweisungen kodiert Arbeitsvorgänge/-schritte über eine Statusinformation (z. B. offen, erledigt) z. B. eines Kopfdatensatzes und/oder der entsprechenden Ausführungsvoraussetzung (z. B. Keine, Arbeitsvorgang/-schritt x, nachfolgender Arbeitsvorgang/- schritt y) mit z. B. den Gerätevoraussetzungen (z. B. 5-Achsdrehfräsen, Drehmomentschlüssel, Weichbearbeitung, ...) flexibel je Produktionssituation durch das Steuersystem und/oder ein Fertigungsgerät ausgewählt und/oder durch ein entsprechendes Fertigungsgerät abgearbeitet (d. h. das Werkstück wird entsprechend der Fertigungsanweisungen durch das entsprechende Fertigungsgerät bearbeitet).

Dabei können über die Ausführungsvoraussetzung und/oder Gerätevoraussetzungen (z. B. bei teilweisen Bearbeitungen des Werkstücks) und die Vorgabe von nachfolgenden Fertigungsanweisungen (Arbeitsvorgang/-schritt x) in den Ausführungsvoraussetzungen Zwangsbeziehungen zwischen Fertigungsanweisungen festgelegt werden. Mit anderen Worten kann hierfür für bestimmte ausgewählte Fertigungsanweisungen und/oder für alle Fertigungsanweisungen eine Abarbeitungsreihenfolge durch die Fertigungsgeräte vorgegeben werden.

In weiteren Varianten werden Arbeitsplätze oder Fertigungsgeräte mit den gleichen Geräteeigenschaften in qualifizierte Fertigungsgruppen zusammengefasst. Für diese Gruppen können beispielsweise Gruppen von Fertigungsanweisungen (z. B. Fertigungsanweisungsgruppen) gebildet werden, die durch Fertigungsgeräte der entsprechenden Gruppen abgearbeitet werden können. Während der Abarbeitung der Fertigungsanweisungen (z. B. während der Produktion) kann anhand der Kapazitäten der jeweiligen Fertigungsgeräte das Fertigungsgerät ausgewählt werden, das gerade entsprechend freie Ressourcen bzw. Kapazitäten aufweist. Entsprechend kann die Abarbeitung der Fertigungsanweisungen während einer Produktion des Werkstücks dynamisch aufgelöst werden, indem während der laufenden Produktion ein Fertigungsgerät mit freien Ressourcen bzw. Kapazitäten ausgewühlt wird. Die freien Ressourcen bzw. Kapazitäten können beispielsweise in Geräteeigenschaften gespeichert sein, die aktualisiert werden und an das Steuersystem und/oder an die Berechnungsvorrichtung übertragen werden.

Die Zuordnung der Fertigungsgruppen erfolgt durch die Gerätvoraussetzungen der Ausführungsvoraussetzungen und der Geräteeigenschaften der Fertigungsgeräte, die für einen bestimmten Arbeitsvorgang, der in den Fertigungsanweisungen kodiert ist, benötigt werden.

Beispielsweise lassen sich mit den Fertigungsanweisungen und/oder den Ausführungsvoraussetzungen im Arbeitsvorgang/- schritt und Arbeitsplanstruktur sehr flexible Arbeitspläne und somit neue Fertigungskonzepte realisieren.

Durch die flexible Auswahl der Fertigungsgeräte entsteht während der Produktion und Montage ein sogenannter "As Build Arbeitsplan".

Die beschriebenen Fertigungsanweisungen und/oder den Ausführungsvoraussetzungen sind nicht systemgebunden und können somit in jedem Datenmodell eines Arbeitsplanungssystems aufgenommen werden.

Abschließend lassen sich z. B. diese neuen Inhalte einfach in neuen Kommunikationsstandards und -protokollen verarbeiten und somit im IoT-Umfeld und bei neuartigen Kommunikationskonzepten einsetzen.

Mit der Erfindung kann insbesondere der Fertigungsprozess für ein Produkt z. B. bei der konkreten Erstellung eines einzelnen Produktes flexibel anhand der freien Kapazitäten/Ressourcen der Fertigungsgeräte konfiguriert werden und/oder angepasst werden und/oder gesteuert werden. Dies ist insbesondere vorteilhaft, wenn eine Vielzahl gleichartiger oder identischer Produkte hergestellt wird. In einem solchen Fall ließen sich z. B. bisher lineare Arbeitsabläufe ganz oder teilweise parallelisieren, da anhand der freien Kapazitäten/Ressourcen, der auszuführenden Fertigungsanweisungen und der entsprechenden Ausführungsvoraussetzungen der Fertigungsprozess optimiert werden kann. Mittels dieser Optimierung kann z. B. der Fertigungsprozess beschleunigt werden und/oder die Auslastung der Fertigungsmaschinen verbessert werden.

Die Fig. 2 zeigt das Fertigungsgerät F1 aus Fig. 1 detailliert.

Das Fertigungsgerät F1 umfasst ein Empfangsmodul 310, ein Überprüfungsmodul 320, ein Ausführungsmodul 330 und ein optionales Kommunikationsmodul 240, die über einen Bus 201 kommunikativ verbunden sind.

Das Empfangsmodul 310 ist zum Empfangen eines Werkstückes und von Fertigungsanweisungen eingerichtet ist. Zusätzlich können noch Ausführungsvoraussetzungen für die Fertigungsanweisungen empfangen werden, wobei die Ausführungsvoraussetzungen den Fertigungsanweisungen zugeordnet sind.

Das Überprüfungsmodul 320 ist dazu eingerichtet ein Prüfergebnis für die Fertigungsanweisungen zu ermitteln.

Das Ausführungsmodul 330 dazu eingerichtet die Fertigungsanweisungen zur Bearbeitung des Werkstückes anhand des Prüfergebnisses auszuführen.

Beispielsweise werden beim Ermitteln des Prüfergebnisses die Geräteeigenschaften des Fertigungsgerätes F1 überprüft, ob diese beispielsweise Gerätevoraussetzungen der Ausführungsvoraussetzungen erfüllen. Erfüllen beispielsweise die Geräteeigenschaften die Gerätevoraussetzungen wird dies im Prüfergebnis gespeichert. Wenn beispielsweise das Prüfergebnis angibt, dass die Geräteeigenschaften die Gerätevoraussetzungen erfüllen, so werden die entsprechenden Fertigungsanweisungen durch das Fertigungsgerät bzw. das Ausführungsmodul ausgeführt. Erfüllen die Geräteeigenschaften die Gerätevoraussetzungen beispielsweise nicht, so wird dies im Prüfergebnis gespeichert und das Ausführungsmodul unterdrückt anhand dieses Prüfergebnisses beispielsweise die Ausführung der Fertigungsanweisungen.

Das Fertigungsgerät F1 kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Steuern einer Fertigung dargestellt.

Das Verfahren umfasst einen ersten Verfahrensschritt 31 zum Laden von Fertigungsvarianten und/oder Ausführungsvoraussetzungen und/oder Fertigungsanweisungen für eine Bearbeitung eines Werkstückes.

Das Verfahren umfasst einen zweiten Verfahrensschritt 32 zum Auswählen einer der Fertigungsvarianten, wobei entsprechende Fertigungsgeräte mittels ihrer der Geräteeigenschaften und/oder anhand der ausgewählten Fertigungsvariante auszuwählen.

Das Verfahren umfasst einen dritten Verfahrensschritt 33 zum Transportieren des Werkstücks zu den jeweiligen ausgewählten Fertigungsgeräten.

Die Fig. 4 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Ausführen von Fertigungsanweisungen dargestellt.

Das Verfahren umfasst einen ersten Verfahrensschritt 410 zum Laden von Ausführungsvoraussetzungen und/oder Fertigungsanweisungen für eine Bearbeitung eines Werkstückes.

Das Verfahren umfasst einen zweiten Verfahrensschritt 420 zum Ermitteln eines Prüfergebnisses für die Fertigungsanweisungen.

Das Verfahren umfasst einen dritten Verfahrensschritt 430 zum Ausführen der Fertigungsanweisungen zur Bearbeitung des Werkstückes anhand des Prüfergebnisses.

Die Fig. 4 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Berechnen von Fertigungsanweisungen dargestellt.

Das Verfahren umfasst einen ersten Verfahrensschritt 510 zum Laden von Arbeitsvorgängen für ein Werkstück.

Das Verfahren umfasst einen zweiten Verfahrensschritt 520 zum Berechnen von Ausführungsvoraussetzungen für zumindest einen Teil der Arbeitsvorgänge.

Das Verfahren umfasst einen dritten Verfahrensschritt 530 zum Berechnen von Fertigungsanweisungen für zumindest einen Teil der Arbeitsvorgänge.

Das Verfahren umfasst einen vierten Verfahrensschritt 540 zum Zuordnen, wobei den jeweiligen Fertigungsanweisungen entsprechende Ausführungsvoraussetzungen zugeordnet werden.

Das Verfahren umfasst einen fünften Verfahrensschritt 550 zum Berechnen von ausführbaren Fertigungsvarianten für eine Bearbeitung des Werkstücks anhand der Fertigungsanweisungen und/oder der Ausführungsvoraussetzungen.

Das Verfahren umfasst einen sechsten Verfahrensschritt 560 zum Bereitstellen der Fertigungsanweisungen und/oder der Ausführungsvoraussetzungen.

Die Erfindung betrifft ein Berechnungsvorrichtung, ein Steuersystem und Fertigungsgeräte, die es erlauben den Fertigungsablauf bei der Bearbeitung eins Werkstückes dynamisch (also während der Produktion) zu steuern. Hierdurch können beispielsweise die Kapazitäten und/oder Ressourcen der Fertigungsgeräte besser ausgenutzt werden und es entstehen z. B. nur noch geringe Leerlaufzeiten der Fertigungsgeräte.

In einem weiteren, nicht in einer Figur dargestellten Ausführungsbeispiel, umfasst das Steuersystem:
- beispielsweise mehrere Fertigungsgeräte, wobei beispielsweise ein jeweiliges Fertigungsgerät Geräteeigenschaften für eine Durchführung von Fertigungsschritten umfasst;
- beispielsweise ein Lademodul zum Laden von Ausführungsvoraussetzungen und/oder Fertigungsanweisungen für eine Bearbeitung eines Werkstückes;
- beispielsweise ein Selektionsmodul, wobei beispielsweise Selektionsmodul dazu eingerichtet ist anhand der Ausführungsvoraussetzungen und/oder Fertigungsanweisungen entsprechende Fertigungsgerät mittels ihrer der Geräteeigenschaften auszuwählen;
- ein Transportmodul, wobei
   - beispielsweise das Transportmodul dazu eingerichtet ist das Werkstück zu den jeweiligen ausgewählten Fertigungsgeräten zu transportieren.

In einem weiteren, nicht in einer Figur dargestellten Ausführungsbeispiel, umfasst das Fertigungsgerät:
- beispielsweise ein Empfangsmodul, wobei beispielsweise das Empfangsmodul zum Empfangen eines Werkstückes und von Fertigungsanweisungen eingerichtet ist;
- beispielsweise ein Überprüfungsmodul, wobei beispielsweise das Überprüfungsmodul dazu eingerichtet ist ein Prüfergebnis für die Fertigungsanweisungen zu ermitteln,
- beispielsweise ein Ausführungsmodul, wobei beispielsweise das Ausführungsmodul dazu eingerichtet ist die Fertigungsanweisungen zur Bearbeitung des Werkstückes anhand des Prüfergebnisses auszuführen.

In einem weiteren, nicht in einer Figur dargestellten Ausführungsbeispiel, umfasst die Berechnungsvorrichtung:
- beispielsweise ein Lademodul (310), wobei beispielsweise das Lademodul (310) zum Laden von Arbeitsvorgängen für ein Werkstück eingerichtet ist;
- beispielsweise ein Evaluierungsmodul (320), wobei
   - beispielsweise das Evaluierungsmodul (320) dazu eingerichtet ist Ausführungsvoraussetzungen zumindest für einem Teil der Arbeitsvorgänge zu berechnen,
   - beispielsweise das Evaluierungsmodul (320) dazu eingerichtet ist Fertigungsanweisungen zumindest für einem Teil der Arbeitsvorgänge zu berechnen,
   - beispielsweise das Evaluierungsmodul (320) dazu eingerichtet ist jeweiligen Fertigungsanweisungen entsprechende Ausführungsvoraussetzungen zuzuordnen;
- beispielsweise ein Bereitstellungsmodul (330), wobei das Bereitstellungsmodul (330) dazu eingerichtet ist, die Fertigungsanweisungen und/oder die Ausführungsvoraussetzungen bereitzustellen.

In einem weiteren, nicht in einer Figur dargestellten Ausführungsbeispiel, umfasst ein cyberphysikalisches System (z. B. ein Produktionssystem):
- beispielsweise ein Steuersystem oder eine der erläuterten Ausführungsbeispiele, Ausführungsformen oder Varianten des Steuersystems;
- beispielsweise eine Berechnungsvorrichtung oder eine der erläuterten Ausführungsbeispiele, Ausführungsformen oder Varianten der Berechnungsvorrichtung;
- beispielsweise ein oder mehrere Fertigungsgeräte oder eine der erläuterten Ausführungsbeispiele, Ausführungsformen oder Varianten der Fertigungsgeräte.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Steuerungssystem für eine Fertigung aufweisend:
- mehrere Fertigungsgeräte, wobei ein jeweiliges Fertigungsgerät Geräteeigenschaften für eine Durchführung von Fertigungsschritten umfasst;
- ein Lademodul zum Laden von Fertigungsvarianten und/oder Ausführungsvoraussetzungen und/oder Fertigungsanweisungen für eine Bearbeitung eines Werkstückes;
- ein Selektionsmodul, wobei
- Selektionsmodul dazu eingerichtet ist eine der Fertigungsvarianten auszuwählen,
- Selektionsmodul dazu eingerichtet ist entsprechende Fertigungsgeräte mittels ihrer der Geräteeigenschaften und/oder anhand der ausgewählten Fertigungsvariante auszuwählen;
- ein Transportmodul, wobei
- das Transportmodul dazu eingerichtet ist das Werkstück zu den jeweiligen ausgewählten Fertigungsgeräten zu transportieren.

2. Steuerungssystem nach Anspruch 1, wobei
- nach einer Abarbeitung der Fertigungsanweisungen durch ein Fertigungsgerät ein Bestätigungsdatensatz über die Abarbeitung gespeichert wird,
- beispielsweise der Bestätigungsdatensatz in einer Statusinformation eines Kopfdatensatzes der entsprechenden Fertigungsanweisungen und/oder der entsprechenden Ausführungsvoraussetzungen gespeichert wird.

3. Steuerungssystem nach einem der vorhergehenden Ansprüche, wobei
- das Steuerungssystem ein Überprüfungsmodul umfasst,
- das Überprüfungsmodul dazu eingerichtet ist ein Prüfergebnis für die ausgewählte Fertigungsvariante zu ermitteln,
- beispielsweise das Transportmodul abhängig von dem Prüfergebnis das Werkstück zu den ausgewählten Fertigungsgeräten transportiert,
- beispielsweise das Ermitteln des Prüfergebnisses bei der Übergabe des Werkstückes an eines der ausgewählten Geräte erfolgt.

4. Steuerungssystem nach Anspruch 3, wobei
- das Überprüfungsmodul dazu eingerichtet ist das Prüfergebnis anhand von Bestätigungsdatensätzen für abgearbeitete Fertigungsanweisungen und der vorausgesetzten bereits ausgeführten Fertigungsanweisungen ermittelt, und/oder
- das Überprüfungsmodul dazu eingerichtet ist das Prüfergebnis anhand von aktuellen Geräteeigenschaften unter einer Berücksichtigung von Gerätevoraussetzungen zu ermitteln, und/oder
- das Überprüfungsmodul dazu eingerichtet ist das Prüfergebnis anhand von aktuellen Geräteeigenschaften unter einer Berücksichtigung der Fertigungsanweisungen und/oder Ausführungsvoraussetzungen zu ermitteln.

5. Steuerungssystem nach einem der vorhergehenden Ansprüche, wobei
- das Selektionsmodul einen Optimierer umfasst,
- der Optimierer dazu eingerichtet ist die Fertigungsvariante unter einer Berücksichtigung einer vorgegebenen Optimierungsgröße auswählt,
- beispielsweise abhängig von der Optimierungsgröße Gruppen von Fertigungsgeräten gebildet werden, um die Fertigungsanweisungen entsprechend der Optimierung abzuarbeiten.

6. Steuerungssystem nach Anspruch 5, wobei die Optimierungsgröße eine Fertigungszeit und/oder eine Auslastung der Fertigungsgeräte und/oder ein Materialverbrauch ist.

7. Steuerungssystem nach einem der vorhergehenden Ansprüche, wobei
- die Ausführungsvoraussetzungen die Optimierungsgröße und/oder die Ausführungsvoraussetzungen Gerätevoraussetzungen umfassen,
- die Gerätevoraussetzungen beispielsweise eine Fertigungspräzision für zumindest einen Teil der Fertigungsanweisungen umfassen und/oder die gerätespezifischen Voraussetzungen für zumindest einen Teil der Fertigungsanweisungen eine Fertigungsgeschwindigkeit vorgeben und/oder die gerätespezifischen Voraussetzungen für zumindest einen Teil der Fertigungsanweisungen eine Fertigungs- und/oder Gerätezuverlässigkeit vorgeben.

8. Fertigungsgerät aufweisend:
- ein Empfangsmodul, wobei das Empfangsmodul zum Empfangen eines Werkstückes und von Fertigungsanweisungen eingerichtet ist;
- ein Überprüfungsmodul, wobei das Überprüfungsmodul dazu eingerichtet ist ein Prüfergebnis für die Fertigungsanweisungen zu ermitteln,
- ein Ausführungsmodul, wobei das Ausführungsmodul dazu eingerichtet ist die Fertigungsanweisungen zur Bearbeitung des Werkstückes anhand des Prüfergebnisses auszuführen.

9. Fertigungsgerät nach Anspruch 8, wobei
- die Ausführungsvoraussetzungen Gerätevoraussetzungen und/oder vorausgesetzte bereits ausgeführte Fertigungsanweisungen umfassen.

10. Fertigungsgerät nach Anspruch 9, wobei
- das Überprüfungsmodul dazu eingerichtet ist das Prüfergebnis anhand von Bestätigungsdatensätzen für abgearbeitete Fertigungsanweisungen und der vorausgesetzten bereits ausgeführten Fertigungsanweisungen ermittelt, und/oder
- das Überprüfungsmodul dazu eingerichtet ist das Prüfergebnis anhand von aktuellen Geräteeigenschaften unter einer Berücksichtigung der Gerätevoraussetzungen zu ermitteln, und/oder
- das Überprüfungsmodul dazu eingerichtet ist das Prüfergebnis anhand von aktuellen Geräteeigenschaften unter einer Berücksichtigung der Fertigungsanweisungen und/oder Ausführungsvoraussetzungen zu ermitteln.

11. Berechnungsvorrichtung (300) zum Berechnen von Fertigungsanweisungen aufweisend:
- ein Lademodul (310), wobei das Lademodul (310) zum Laden von Arbeitsvorgängen für ein Werkstück eingerichtet ist;
- ein Evaluierungsmodul (320), wobei
- das Evaluierungsmodul (320) dazu eingerichtet ist Ausführungsvoraussetzungen zumindest für einem Teil der Arbeitsvorgänge zu berechnen,
- das Evaluierungsmodul (320) dazu eingerichtet ist Fertigungsanweisungen zumindest für einem Teil der Arbeitsvorgänge zu berechnen,
- das Evaluierungsmodul (320) dazu eingerichtet ist jeweiligen Fertigungsanweisungen entsprechende Ausführungsvoraussetzungen zuzuordnen;
- das Evaluierungsmodul dazu eingerichtet ist ausführbare Fertigungsvarianten für eine Bearbeitung des Werkstücks anhand der Fertigungsanweisungen und/oder der Ausführungsvoraussetzungen zu berechnen;
- ein Bereitstellungsmodul (330), wobei das Bereitstellungsmodul (330) dazu eingerichtet ist, die Fertigungsanweisungen und/oder die Ausführungsvoraussetzungen und/oder die Fertigungsvarianten bereitzustellen.

12. Berechnungsvorrichtung nach Anspruch 11, wobei die Ausführungsvoraussetzungen
- Geräteeigenschaften als Gerätevoraussetzung von Fertigungsgeräten umfassen, die die Fertigungsanweisungen ausführen sollen, und/oder
- vorausgesetzte bereits ausgeführte Fertigungsanweisungen umfassen, die vor einer Ausführung der aktuellen Fertigungsanweisungen ausgeführt sein sollen und/oder
- Vorgaben über nachfolgende Fertigungsanweisungen umfassen, die nach den aktuellen Fertigungsanweisungen ausgeführt werden sollen.

13. Berechnungsvorrichtung nach Anspruch 11 oder 12, wobei
- die Ausführungsvoraussetzungen und/oder die jeweiligen Fertigungsanweisungen und/oder die Fertigungsanweisungsgruppen einen Kopfdatensatz mit einer Statusinformation über deren Abarbeitung umfassen,
- beispielsweise die Statusinformation oder der Kopfdatensatz nach einem Abarbeiten einer jeweiligen Fertigungsanweisung durch ein Fertigungsgerät einen Bestätigungsdatensatz umfasst.

14. Berechnungsvorrichtung nach einem der Ansprüche 11 - 13, wobei
- die jeweilige Fertigungsanweisung als Fertigungsanweisungsgruppen strukturiert werden,
- die jeweiligen Fertigungsanweisungsgruppen anhand der Gerätevoraussetzung von den jeweiligen Fertigungsanweisungen gebildet werden.

15. Computerimplementiertes Verfahren zum Steuern einer Fertigung mit folgenden Verfahrensschritten:
- Laden von Fertigungsvarianten und/oder Ausführungsvoraussetzungen und/oder Fertigungsanweisungen für eine Bearbeitung eines Werkstückes;
- Auswählen einer der Fertigungsvarianten, wobei entsprechende Fertigungsgeräte mittels ihrer der Geräteeigenschaften und/oder anhand der ausgewählten Fertigungsvariante auszuwählen;
- Transportieren des Werkstücks zu den jeweiligen ausgewählten Fertigungsgeräten.

16. Computerimplementiertes Verfahren zum Ausführen von Fertigungsanweisungen mit folgenden Verfahrensschritten:
- Empfangen eines Werkstückes und von Fertigungsanweisungen;
- Ermitteln eines Prüfergebnisses für die Fertigungsanweisungen;
- Ausführen der Fertigungsanweisungen zur Bearbeitung des Werkstückes anhand des Prüfergebnisses.

17. Computerimplementiertes Verfahren zum Berechnen von Fertigungsanweisungen mit folgenden Verfahrensschritten:
- Laden von Arbeitsvorgängen für ein Werkstück;
- Berechnen von Ausführungsvoraussetzungen für zumindest einen Teil der Arbeitsvorgänge;
- Berechnen von Fertigungsanweisungen für zumindest einen Teil der Arbeitsvorgänge;
- Zuordnen, wobei den jeweiligen Fertigungsanweisungen entsprechende Ausführungsvoraussetzungen zugeordnet werden;
- Berechnen von ausführbaren Fertigungsvarianten für eine Bearbeitung des Werkstücks anhand der Fertigungsanweisungen und/oder der Ausführungsvoraussetzungen;
- Bereitstellen der Fertigungsanweisungen und/oder der Ausführungsvoraussetzungen und/oder der Fertigungsvarianten.

18. Computerprogrammprodukt mit Programmbefehlen zur Durchführung des Verfahrens nach Anspruch 17 und/oder Anspruch 16 und/oder Anspruch 15.

19. Bereitstellungsvorrichtung für das Computerprogrammprodukt nach Anspruch 18, wobei die Bereitstellungsvorrichtung das Computerprogrammprodukt speichert und/oder bereitstellt.
